# EUROPÄISCHE PATENTSCHRIFT

(11) **EP 3 623 085 B1**
(45) Veröffentlichungstag und Bekanntmachung des Hinweises auf die Patenterteilung: **10.11.2021**
(21) Anmeldenummer: 18194142.8
(22) Anmeldetag: 13.09.2018
(51) Int. Cl.: B23B 31/14, B23B 31/177

(54) **SPANNFUTTER**
COLLET CHUCK
MANDRIN

(43) Veröffentlichungstag der Anmeldung: 18.03.2020
(73) Patentinhaber: SMW-AUTOBLOK Spannsysteme GmbH, 88074 Meckenbeuren (DE)
(72) Erfinder: HELM, Peter, 88074 Meckenbeuren (DE); MAURER, Eckhard, 88094 Oberteurigen (DE); RÖSNER, Christian, 88074 Meckenbeuren (DE)
(74) Vertreter: Engelhardt, Volker

(56) Entgegenhaltungen:
- DE-A1- 10 100 148
- DE-B3-102015 104 058
- DE-B4-102015 204 502
- US-A- 1 786 147

## Beschreibung

Die Erfindung bezieht sich auf ein Spannfutter, durch das Werkstücke vereinzelt und zentriert zu deren Bearbeitung durch eine Werkzeugmaschine abgestützt sind nach dem Oberbegriff des Patentanspruchs 1. Ein solches Spannfutter ist aus DE 10 2015 104 058 B bekannt.

Ebenfalls ist eine solche Spannvorrichtung, die unter dem Fachbegriff Spannfutter bekannt ist, aus der DE 10 2015 204 502 B4 zu entnehmen. Zwischen den Grundbacken und einer mechanisch betätigbaren Antriebseinheit ist eine Wippe und ein Mitnehmer vorgesehen, die jeweils mit einer der Wippen trieblich verbunden sind. Darüber hinaus ist ein Koppelring im Zentrum des Spannfutters angeordnet, an dem die vier Mitnehmer angebracht sind, derart, dass zwischen diesen Bauteilen in radialer Richtung ein Bewegungsspiel vorhanden ist. Der Koppelring ist drehbar um die Spannachse in dem Futterkörper oder Gehäuse des Spannfutters gelagert. Durch Verdrehen des Koppelrings entsteht dabei eine radiale Zustellbewegung der Grundbacke, so dass ein Werkstück durch die vier Spannbacken gehalten ist, da diese in Richtung des Werkstückes fahren und eine Spannkraft erzeugen.

Da die Einspannung eines Werkstückes mittels vier paarweise diametral gegenüberliegende Spannbacken eine mechanische Überbestimmung darstellt, ist das Bewegungsspiel zwischen dem Koppelring und dem jeweiligen Mitnehmer vorzusehen. Wenn nämlich eines der Paare der Spannbacken früher an das einzuspannende Werkstückes auftrifft, ist deren Zustellbewegung zu stoppen, um zu gewährleisten, dass die dazu senkrecht verlaufenden Spannbacken die noch vorhandene Distanz zwischen diesen und der Oberfläche des Werkstückes zurücklegen können. Erst wenn sämtliche der vier Spannbacken an der Oberfläche des Werkstückes anliegen, soll eine entsprechende Spannkraft erzeugt sein. Das Bewegungsspiel dient somit als Ausgleich für die Spannbacken, wenn diese in Richtung des Werkstückes bewegt sind. Insbesondere wenn die Werkstücke eine rechteckförmige Außenkontur aufweisen, so dass deren Seitenlängen unterschiedlich bemessen sind, entsteht die Notwendigkeit, diese unterschiedlichen Distanzen zwischen den Paaren von diametral gegenüberliegenden Spannbacken auszugleichen.

Aufgrund des erforderlichen Bewegungsspiels zwischen dem Koppelring und dem Mitnehmer, die mechanisch mit den Grundbacken bzw. Spannbacken gekoppelt sind, entsteht jedoch oftmals eine erhebliche Ungenauigkeit, so dass die Positionierung des Werkstückes fehlerhaft ist. Dies wiederum führt zu Bearbeitungsfehlern an dem Werkstück selbst, da die Wiederholungsgenauigkeit des Einspannens von einer Vielzahl von identischen Werkstücken nicht gewährleistet werden kann.

Nachteiliger Weise sind jedoch solche Bewegungsmöglichkeiten hinsichtlich der Spannwirkung mit oftmals erheblichen Toleranzabweichungen verbunden, so dass die erforderliche Spannkraft nicht exakt vorhersehbar bzw. vorbestimmter ist.

Die vorhandenen Bewegungsspiele zwischen den im Kraftfluss angeordneten Bauteilen führen nämlich dazu, dass eine Relativbewegung zwischen diesen Bauteilen entsteht.

Es ist daher Aufgabe der Erfindung, ein Spannfutter der eingangs genannten Gattung derart weiterzubilden, das eine positionsgenaue, also zentrierte Ausrichtung für eine Vielzahl von unterschiedlich ausgestalteten Werkstücken bei einer hohen Wiederholungsgenauigkeit für nachfolgende Einspannvorgänge erreicht werden kann.

Diese Aufgabe ist erfindungsgemäß durch die Merkmale des Anspruchs 1 gelöst.

Weitere vorteilhafte Weiterbildungen der Erfindung ergeben sich aus den Unteransprüchen.

Dadurch, dass zwischen dem Antriebskolben und jeweils zwei benachbarten Spannbacken eine Wippe vorgesehen ist, dass die Wippe einen Symmetrie-Mittelpunkt aufweist, in den ein an dem Antriebskolben gelagerter Bolzen eingesetzt ist, um den die Wippe in Abhängigkeit von der Anlage der Spannbacken an dem Werkstück verschwenkbar abgestützt ist, und dass seitlich benachbart zu dem Bolzen jeweils ein Übertragungsstift vorgesehen ist, an dessen gegenüberliegenden Ende an der Wippe die jeweilige Spannbacke gelagert und abgestützt ist, ist erreicht, dass die Distanz von zwei benachbarten Spannbacken bezogen auf den Abstand zu dem Werkstück ausgeglichen ist, ohne dass jedoch ein Bewegungsspiel oder sonstige nicht beherrschbare Abweichungen innerhalb des Kraftflusses entstehen, wodurch eine genaue Ausrichtung des jeweils einzuspannenden Werkstückes gewährleistet werden kann.

Da zwischen dem Antriebskolben und der jeweils zu bewegenden Spannbacke die Wippe, also innerhalb des Kraftflusses, eingebaut ist und die Wippe die Relativbewegungen des Antriebskolbens unmittelbar durch die Übertragungsstifte auf die Spannbacken weitergibt, ist eine spielfreie und ausgleichende Einspannung des Werkstückes erreicht. Die paarweise diametral gegenüberliegenden Spannbacken sind dabei einer identischen Länge eines Werkstückes zugeordnet, so dass bei rechteckförmigen Werkstücken ein Paar der Spannbacken als erstes auf dieses auftrifft. Die weitere Zustellbewegung dieser Spannbacken ist zu unterbrechen, und zwar solange bis das dazu senkrecht angeordnete Spannbacken-Paar an dem Werkstück zur Anlage gelangt. Der Antriebskolben führt dabei eine axiale Bewegung aus, so dass auch die Wippen und die Übertragungsstifte parallel zur Längsachse des Futterkörpers bewegt sind. Aufgrund der vorhandenen Schrägverzahnung, dem Antriebskolben und den Spannbacken wird dabei die axiale Zustellbewegung des Antriebskolbens in eine radiale Zustellbewegung für die Spannbacken umgewandelt.

Es ist besonders vorteilhaft, wenn in dem Futterkörper ein Fliehkraftgewicht angeordnet ist, das über einen Hebel mit jeweils einer der Spannbacke mechanisch gekoppelt ist. Der Hebel ist dabei in dem Futterkörper gelagert und durch die Ausrichtung des Hebels entsteht während der Rotation des Futterkörpers eine auf das Fliehkraftgewicht einwirkende Zentripetalkraft, durch die dieses nach außen gedrückt ist. Folglich wird der Hebel in Richtung der Längsachse des Futterkörpers bewegt und es entsteht eine radiale zusätzliche Spannkraft auf die jeweiligen Spannbacken. Die vorgesehene Form der Wippen und Übertragungsstifte behindern dabei diese zusätzliche Spannkrafterhöhung nicht, denn der von dem Antriebskolben aufgebrachte Kraftfluss wirkt unmittelbar auf die Spannbacken ein und die Fliehkraftgewichte erzeugen aufgrund der Rotation des Futterkörpers eine eigenständige Spannkraftkomponente.

Um die Bewegungen der Wippe auf den jeweiligen Übertragungsstift ohne Verkannten oder Festsetzen zu erreichen, ist in die Wippe eine Führungsnut eingearbeitet, in die einer der Übertragungsstifte beweglich eingesetzt ist. Dabei weist ein an dem jeweiligen Übertragungsstift angeformter Kopf bezogen auf die Längsachsen der Breite der Führungsnut kein Spiel auf, so dass zwei Flanken des Kopfes an der Innenwand der Führungsnut anliegen, wodurch eine spielfreie Kraftübertragung zwischen der Wippe und dem Kopf des Übertragungsstiftes in Bewegungsrichtung erreicht ist. Wenn die Wippe auf eine Seite ausgelenkt ist, dann bewegt sich der Kopf linear in der Führungsnut, da die Länge des Kopfes kleiner bemessen ist als die Länge der Führungsnut; jedoch kann gleichzeitig eine Kraftübertragung in Bewegungsrichtung erfolgen, da die Auslenkung der Wippe in einem äußerst klein gemessenen Winkelbereich erfolgt.

Die Aufhängung der Wippe an dem Antriebskolben findet in ihrem Symmetrie-Mittelpunkt statt und der Abstand der Führungsnuten zu diesem Symmetrie-Mittelpunkt ist gleich groß bemessen, so dass die Auslenkung der Wippe an allen vier Wippen identisch ist und jeweils der Spannbacke zugeordnet ist, die als erstes auf das einzuspannende Werkstück auftrifft.

In der Zeichnung ist ein erfindungsgemäßes Spannfutter dargestellt, das nachfolgend näher erläutert ist. Im Einzelnen zeigt:
- Figur 1: ein Spannfutter mit einem Futterkörper, in dem vier senkrecht zueinander ausgerichtete Spannbacken radial verschiebbar gelagert sind, durch die ein zumindest teilweise rechteckförmig ausgestaltetes Werkstück zentriert im Raum gehalten ist, in Draufsicht,
- Figur 2: das Spannfutter gemäß Figur 1, in perspektivischer Ansicht und teilweise aufgeschnitten und mit vier der jeweiligen Spannbacke zugeordneten Fliehkraftgewichten, die über einen Hebel mit diesen mechanisch gekoppelt sind,
- Figur 3: ein Antriebskolben des Spannfutters gemäß Figur 1 mit ausgebauten Spannbacken und den daran angeforderten Schrägflächen zu deren radialen Zustellung sowie mit vier an der Außenseite des Antriebskolbens angebrachten Wippen, die über jeweils einen Übertragungsstift mit einem der Spannbacken trieblich gekoppelt sind,
- Figur 4a: der Antriebskolben des Spannfutters gemäß Figur 3 im Ausgangszustand und im Schnitt,
- Figur 4b: der Antriebskolben des Spannfutters gemäß Figur 4a in einer Auslenkposition der Wippe,
- Figur 5a: das Spannfutter gemäß Figur 1 im Ausgangszustand und teilweise geschnitten,
- Figur 5b: das Spannfutter gemäß Figur 1 in einer Stellung, bei der zwei diametral gegenüberliegende Spannbacken an dem Werkstück anliegen und die dazu senkrecht verlaufenden Spannbacken von diesem beabstandet sind, und
- Figur 5c: das Spannfutter gemäß Figur 5a mit einem zentriert eingespannten Werkstück.

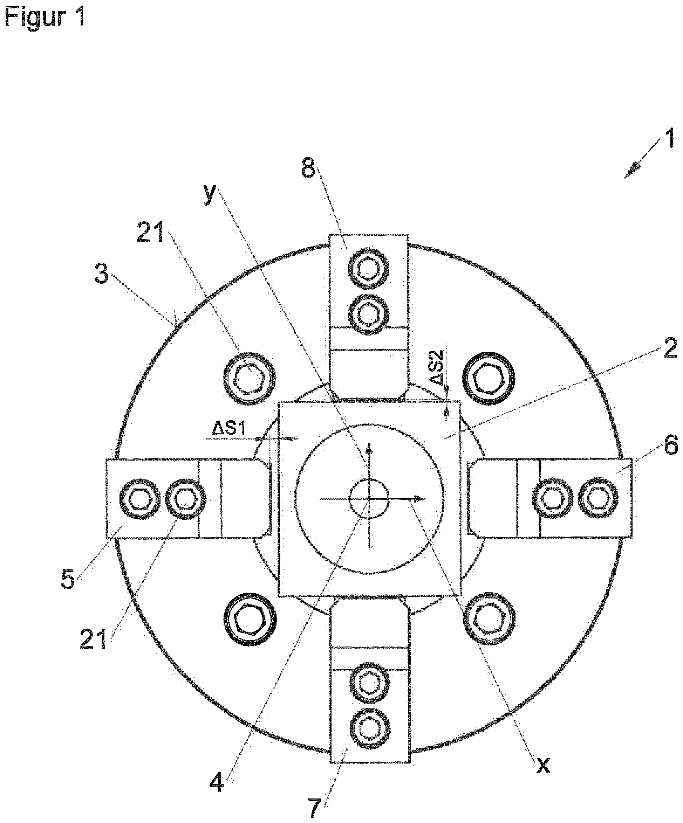

In Figur 1 ist ein Spannfutter 1 abgebildet, durch das ein teilweise rechteckförmiges Werkstück 2 zentriert im Raum zur Bearbeitung durch eine nicht dargestellte Werkzeugmaschine abgestützt ist. Das Spannfutter 1 besteht aus einem Futterkörper 3, an dem vier Spannbacken 5, 6, 7 sowie 8 verfahrbar gelagert sind.

Die Spannbacken 5 und 6 sind in einer X-Ebene, also diametral gegenüberliegend und die Spannbacken 7 und 8 in einer senkrecht dazu verlaufenen Y-Ebene angebracht. Die vier Spannbacken 5, 6, 7 und 8 werden radial in Richtung des Zentrums des Futterkörpers 3, also in Richtung dessen Längsachse 4 und in Richtung des Werkstückes 2 zugestellt. Wenn jedoch das einzuspannende Werkstück 2 eine trapezförmige oder sternförmige Außenkontur aufweist, dann können die Spannbacken 5, 6, 7, 8 in einer beliebigen Position angeordnet sein, so dass durch zwei der vier Spannbacken 5, 6 oder 7, 8 zwar eine der x- oder y- Ebene verläuft, diese Ebenen jedoch nicht senkrecht zueinander ausgerichtet sind.

Wenn das Werkstück 2 unterschiedliche Kantenlängen oder sonstige unterschiedliche Außenkonturen aufweist - dies ist schematisch durch ΔS1 sowie ΔS2 dargestellt - dann treffen die Paare von Spannbacken 5, 6 oder 7, 8 in einer unterschiedlichen Zeitspanne auf die Oberfläche des Werkstückes 2 auf. Wenn nämlich der Abstand ΔS1 größer bemessen ist als der Abstand ΔS2 zwischen den Spannbacken 5, 6 oder 7, 8, dann entsteht ein zeitlich unterschiedlicher Auftreffzeitpunkt. Die vier Spannbacken 5, 6, 7 und 8 werden jedoch synchron mittels eines Antriebskolbens 9 bewegt, so dass dieser räumliche oder zeitliche Versatz auszugleichen ist.

Darüber hinaus ist es problematisch, das Werkstück 2 exakt fluchtend zu der Längsachse 4 manuell oder maschinell zu positionieren. Oftmals liegt demnach der Symmetriemittelpunkt des Werkstückes 2 nicht fluchtend zu der Längsachse 4 des Futterkörpers 3. Durch die Zustellung der Spannbacken 5, 6, 7 und 8 soll dieses Problem sowohl in der X- als auch in der Y-Ebene behoben sein, indem nämlich die vorhandenen Distanzunterschiede durch Verschieben des Werkstücks 2 ausgeglichen sind. Dies erfolgt dadurch, dass die diametral paarweise gegenüberliegenden Spannbacken 5, 6 oder 7, 8 das Werkstück 2 in der X- und/oder Y-Ebene verschieben, um den Symmetriemittelpunkt des Werkstückes 2 fluchtend zu der Längsachse 4 des Futterkörpers 3 auszurichten. Sobald das Werkstück 2 zwischen zwei gegenüberliegenden Spannbacken 5, 6 oder 7, 8 eingespannt ist, ist dieses in der jeweiligen X- oder Y-Ebene positioniert.

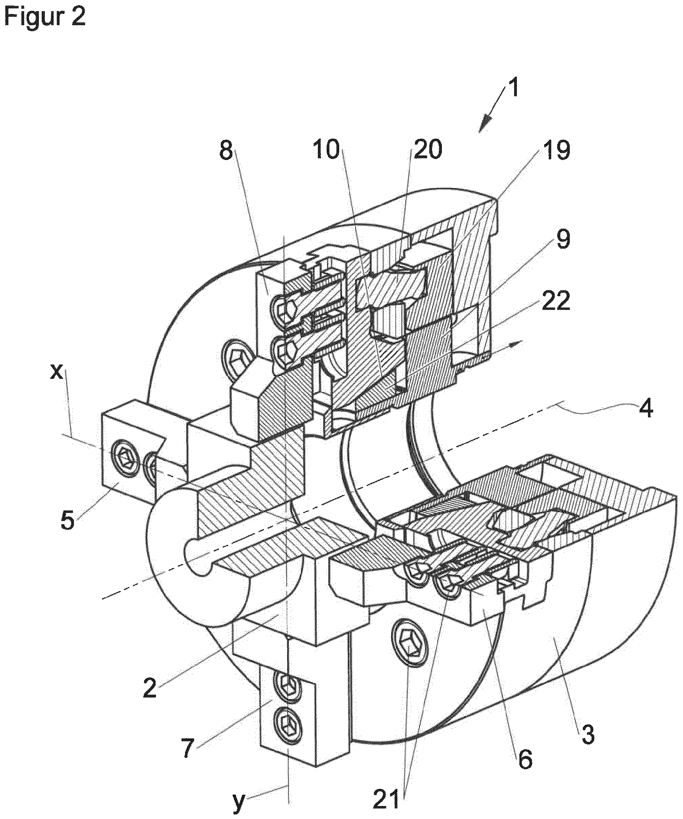

Wenn jedoch die Spannbacken 5, 6, 7 und 8 synchron durch den Antriebskolben 9 bewegt sind, dann ist die zeitliche Differenz des Auftreffens der Spannbacken 5, 6, 7 und 8 auf das Werkstück 2 auszugleichen. Dieser Zeit- oder Geometrie-Ausgleich ist den Figuren 2 bis 5c detailliert zu entnehmen.

Aus Figur 2 ergibt sich, dass der Antriebskolben 9 eine Schrägverzahnung 10 aufweist, die mit einer an den Spannbacken 5, 6, 7 und 8 angearbeiteten Schrägverzahnungen 10 zusammenwirkt. Wenn also der Antriebskolben 9 von dem einzuspannenden Werkstück 2 wegbewegt ist und der Antriebskolben 9 zwischen den Spannbacken 5, 6, 7 und 8 jeweils gegen deren Schrägverzahnung 10 gedrückt ist, dann verschiebt diese Kraftübertragung die Spannbacken 5, 6, 7, 8 radial in Richtung der Längsachse 4, also in Richtung des Werkstückes 2.

Darüber hinaus sind in dem Futterkörper 3, Fliehkraftgewichte 19 verschiebbar gelagert, die jeweils über einen Hebel 20 trieblich mit einem der Spannbacken 5, 6, 7 oder 8 gekoppelt sind. Der Hebel 20 ist verschwenkbar in dem Futterkörper 3 abgestützt. Die in Figur 2 abgebildete Ausgangsposition des Spannfutters 1 zeigt, dass die Fliehkraftgewichte 19 näher zu der Längsachse 4 angeordnet sind und dass dadurch der Hebel 20 schräg nach außen bezogen auf die Richtung zu dem einzuspannen Werkstück 2 verläuft. Sobald jedoch der Futterkörper 3 in Rotation versetzt ist, werden die Fliehkraftgewichte 19 aufgrund der auf diese einwirkenden Zentripetalkräfte nach außen gedrückt, so dass sich der Abstand der Fliehkraftgewichte 19 zu der Längsachse 4 vergrößert. Somit wird auch das dem Fliehkraftgewicht 19 zugeordnete freie Ende des Hebels 20 von der Längsachse 4 wegbewegt und das den jeweiligen Spannbacken 5, 6, 7 oder 8 zugeordnete freie Ende des Hebels 20 in Richtung der Längsachse 4 bewegt, wodurch eine zusätzliche Spannkraft entsteht, um das Werkstück 2 zu fixieren.

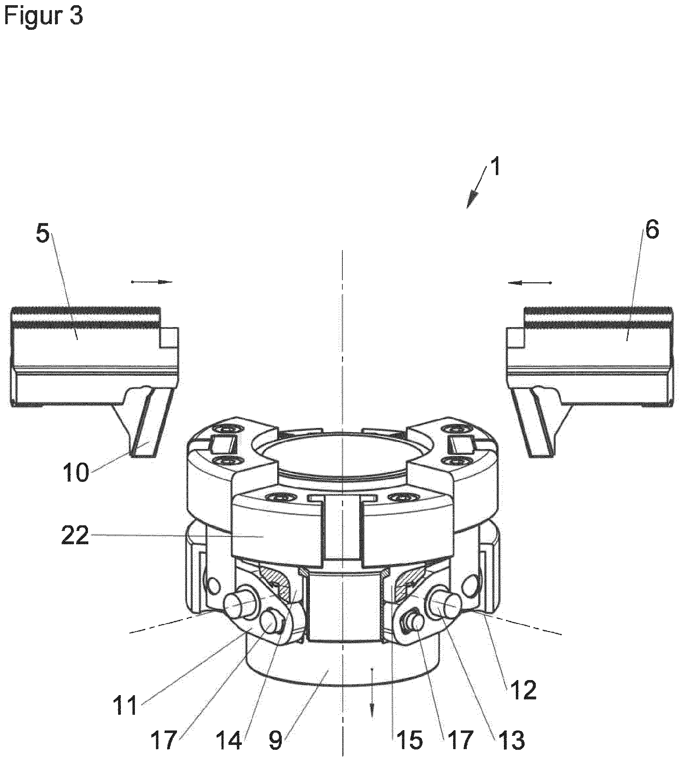

Aus Figur 3 ist ersichtlich, dass in dem Antriebskolben 9 vier Freiräume 23 eingearbeitet sind, in denen die vier Wippen 11 eingesetzt bzw. angeordnet sind, die einen Symmetriemittelpunkt 12 aufweisen. In dem Symmetriemittelpunkt 12 ist eine Aufnahmebohrung eingearbeitet, in die ein Bolzen 13 eingreift. Der Bolzen 13 ist dabei an dem Antriebskolben 9 abgestützt. Die Wippe 11 ist zudem verschwenkbar an dem Bolzen 13 gelagert.

Seitlich neben dem Bolzen 13 sind in die Wippe 11 zwei Führungsnuten 16 eingearbeitet, die im unbetätigten Zustand der Wippe 11 senkrecht zu der Längsachse 4 ausgerichtet sind. Dies bedeutet, dass die Wippe 11 im unbetätigten Zustand nicht ausgelenkt ist, sondern vielmehr senkrecht zu der Längsachse 4 verläuft.

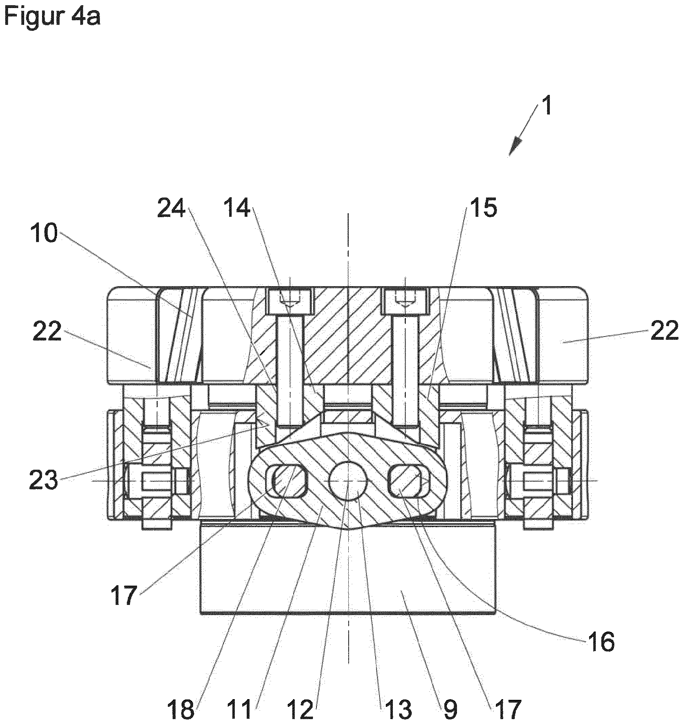

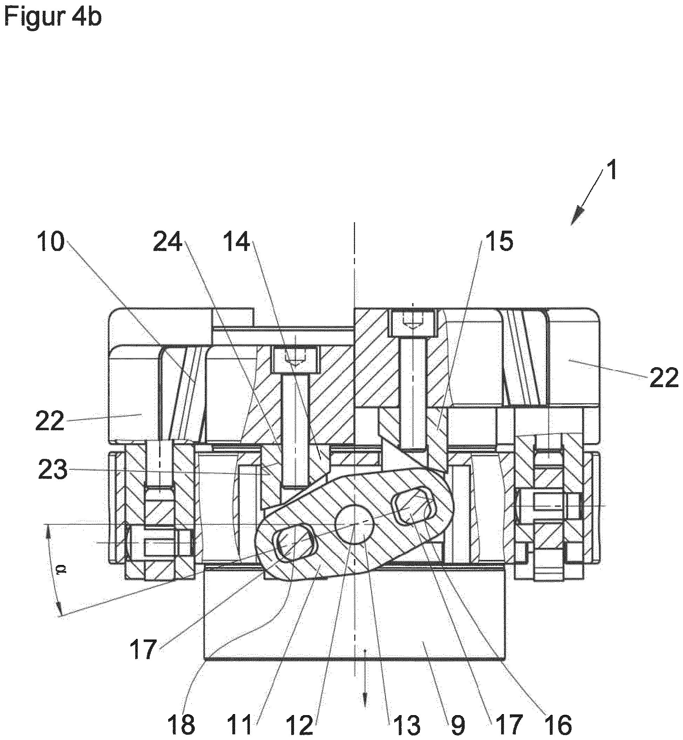

Aus den Figuren 4a und 4b ist die Betätigung der Wippe 11 und die Kraftübertragung zwischen dieser auf die jeweiligen Spannbacke 5, 6, 7 oder 8 zu entnehmen. In die jeweilige Führungsnut 16 ist nämlich ein erster und zweiter Übertragungsstift 14 bzw. 15 eingesetzt. Der erste Übertragungsstift 14 ist dabei den Spannbacken 5 und 6 und der zweite Übertragungsstift 15 den Spannbacken 7 und 8 zugeordnet und trieblich mit diesen jeweils gekoppelt.

Darüber hinaus sind an dem freien der Wippe 11 zugeordneten Ende der Übertragungsstifte 14 und 15 jeweils ein Kopf 17 vorgesehen, der in die jeweilige Führungsnut 16 linear verschiebbar eingesetzt ist. Die Außenkontur des Kopfes 17 ist dabei derart an die Innenkontur der Führungsnut 16 angepasst, dass die in Richtung der Längsachse 4 verlaufenden Stirnseiten an der Innenwand der Führungsnut 16 anliegen und dass zwischen den senkrecht zu der Längsachse 4 verlaufenden Stirnseiten der Köpfe 17 ein Freiraum oder Luftspalt vorhanden ist. Somit können die Köpfe 17 relativ zu der Führungsnut 16 senkrecht zur Längsachse 4 bewegt sein, und zwar dann, wenn die Wippe 11 um den Bolzen 13 in eine der beiden möglichen Auslenkungen bewegt ist. Gemäß Figur 4b trifft nämlich die Spannbacke 7 als erstes auf das Werkstück 2 auf, so dass die Spannbacke 5 weiter in Richtung des Werkstückes 2 zu bewegen ist. Demnach gleicht diese Zustelldifferenz zwischen den beiden Paaren von Spannbacken 7 und 8 einerseits sowie 5 und 6 andererseits die Wippe 11 durch die dargestellte Auslenkung α aus. Der Antriebskolben 9 wird weg von dem einzuspannenden Werkstück 2 gezogen, so dass die bereits an dem Werkstück 2 anliegenden Spannbacken 7 und 8 in ihrer Position zu halten sind und die Differenz aus ΔS2 minus ΔS1 durch die Verschwenkung der Wippe 11 auszugleichen ist.

Des Weiteren sind in den vier Freiräumen 23 jeweils ein Übertragungskeil 22 als Distanzüberbrückung zwischen der Wippe 11 und der jeweiligen Spannbacke 5, 6, 7 oder 8 angeordnet. In dem jeweiligen Übertragungskeil 22 sind Durchgangsbohrungen 24 eingearbeitet, die von dem jeweiligen Übertragungsstift 14, 15 durchgriffen ist bzw. durch diesen hindurchragt.

Die Übertragungskeile 22 dienen als Puffer oder Kraftübertragung zwischen der Wippe 11 und den Spannbacken 5, 6, 7 oder 8 und sind linear beweglich in dem Futterkörper 3 verschiebbar gelagert.

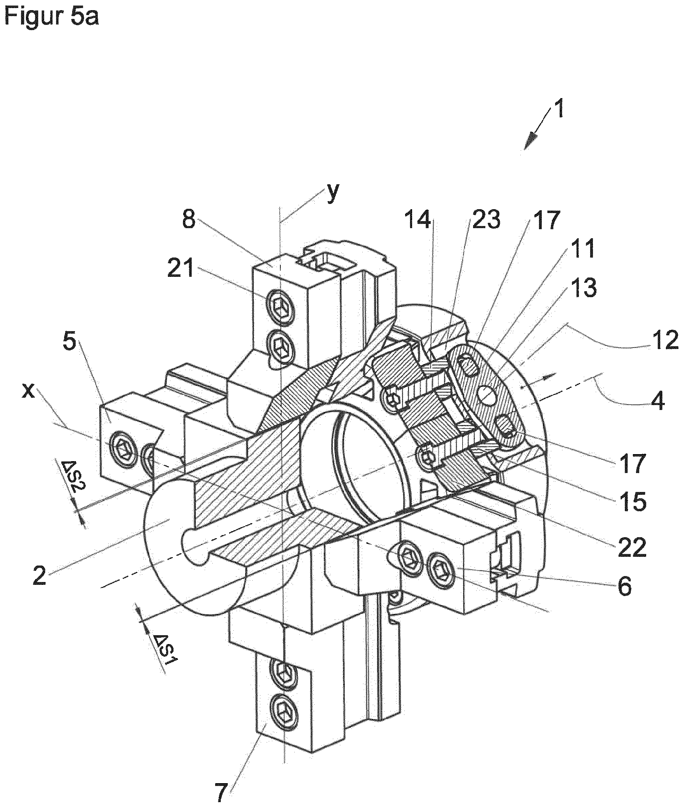

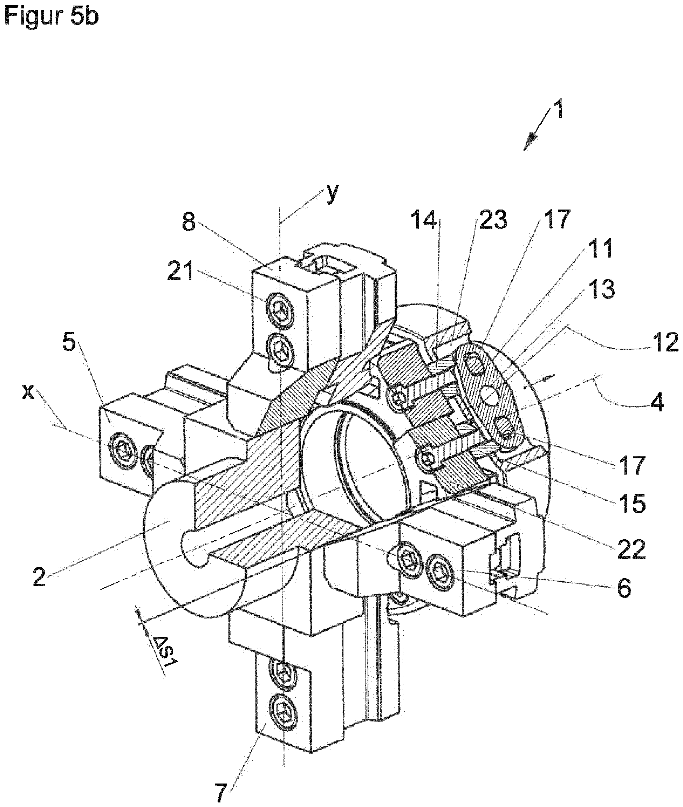

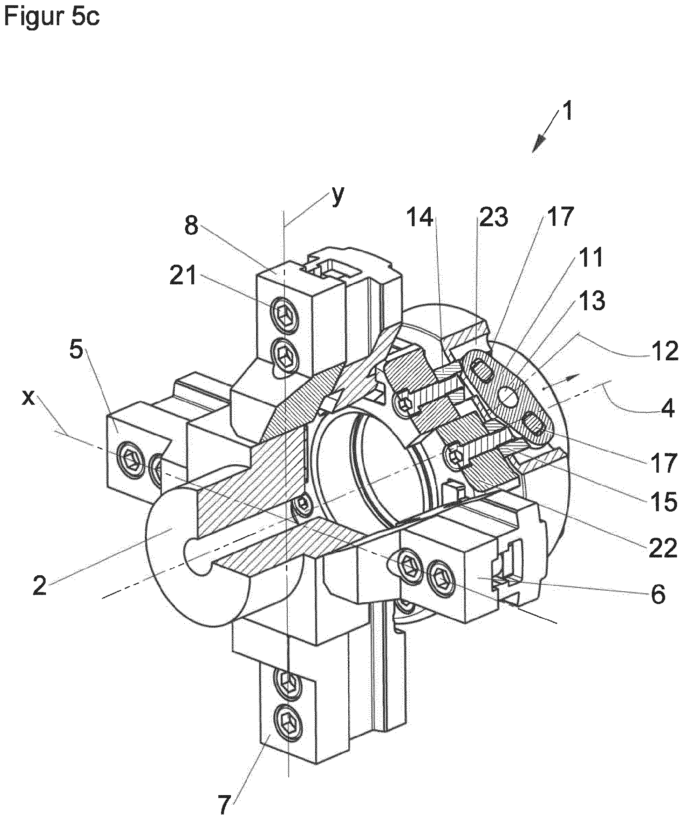

In den Figuren 5a, 5b sowie 5c ist dieser Bewegungsablauf bezogen auf die unterschiedlichen Betriebs- bzw. Spannzustände des Spannfutters 1 detailliert abgebildet. Aus Figur 5a ist ersichtlich, dass die Spannbacken 5, 6, 7 und 8 von dem einzuspannenden Werkstück unterschiedlich weit beanstandet sind. Hierbei handelt es sich demnach um die Ausgangsstellung des Spannfutters 1. Sobald eine Betätigungskraft auf den Antriebskolben 9 einwirkt, werden die Kräfte über den Bolzen 13 auf die Wippe 11 und durch die beiden Übertragungsstift 14 und 15 auf den jeweiligen Spannbacken 5, 6, 7 oder 8 übertragen. Durch die vorhandene Schrägverzahnung 10 wird die lineare Zurücksetzung des Antriebskolbens 9 in eine radiale Zustellbewegung der Spannbacken 5, 6, 7 und 8 umgewandelt, so dass sich diese auf das einzuspannende Werkstück 2 zubewegen.

In Figur 5b ist gezeigt, dass zunächst die diametral gegenüberliegenden Spannbacken 7 und 8 auf das Werkstück 2 auftreffen und diese somit in der Y-Ebene zu der Längsachse 4 ausgerichtet ist. Die Wippe 11 ist in dieser Position der Spannbacken 5 und 6 noch nicht betätigt.

In Figur 5c ist gezeigt, wie die Differenz zwischen den Spannbacken 5 und 6 zu dem Werkstück 2 durch die Auslenkung α der Wippe 11 überbrückt bzw. ausgeglichen ist. Der Antriebskolben 9 wurde weiter in die Betätigungsrichtung bewegt und die Spannbacken 7 und 8 sind durch das Verschwenken der Wippe 11 in ihrer Position gemäß Figur 5b gehalten und ausschließlich die dazu senkrecht angeordneten Spannbacken 5 und 6 werden weiter zugestellt, bis diese auf das Werkstück 2 auftreffen.

Sobald alle vier Spannbacken 5, 6 oder 7 und 8 ihre Anlageposition an dem Werkstück 2 erreicht haben, erzeugt der Antriebskolben 9 die eigentliche Spannkraft. Je weiter dieser angetrieben ist, desto höher ist die erzeugte Spannkraft. Die Wippe 11 und die unterschiedliche Anordnung der Übertragungsstifte 14, 15 wird dadurch nicht verändert, so dass diese in der eingenommenen Ausgleichslage verbleiben.

Durch das erfindungsgemäße Spannfutter 1 können somit Werkstücke 2 zentriert im Raum gehalten und zu deren Bearbeitung durch die Werkzeugmaschine abgestützt sein, die eine beliebige Außenkontur aufweisen, denn die Innenkontur der Spannbacken 5, 6, 7, 8 sind an die Außenkonturen der unterschiedlich ausgestalteten Werkstücke 2 angepasst und können diese teilweise umgreifen.

## Patentansprüche

1. Spannfutter (1), durch das Werkstücke (2) vereinzelt und zentriert zu deren Bearbeitung durch eine Werkzeugmaschine abgestützt sind,
- mit einem Futterkörper (3),
- mit vier an dem Futterkörper (3) radial beweglich gelagerten Spannbacken (5, 6, 7, 8), die jeweils paarweise in einer X- oder Y-Ebene angeordnet sind,
- und mit einem in dem Futterkörper (3) axial beweglichen gelagerten Antriebskolben (9), der mit den vier Spannbacken (5, 6, 7, 8) über eine an dem Antriebskolben (9) und den jeweiligen Spannbacken (5, 6, 7, 8) angearbeitete Schrägfläche oder Schrägverzahnung (10) trieblich gekoppelt sind und diese synchron in Richtung des einzuspannenden Werkstückes (2) zustellt oder von diesem wegbewegt,
**dadurch gekennzeichnet,**
- **dass** zwischen dem Antriebskolben (9) und jeweils zwei benachbarten Spannbacken (5, 7 oder 6, 8) eine Wippe (11) vorgesehen ist,
- **dass** die Wippe (11) einen Symmetrie-Mittelpunkt (12) aufweist, in den ein an dem Antriebskolben (9) verschwenkbar gelagerter Bolzen (13) eingesetzt ist, um den die Wippe (11) in Abhängigkeit von der Anlage der Spannbacken (5, 6 oder 7, 8) an dem Werkstück (2) verschwenkbar ist,
- und **dass** seitlich benachbart zu dem Bolzen (13) jeweils ein trieblich mit der Wippe (11) gekoppelter Übertragungsstift (14, 15) vorgesehen ist, an dessen der Wippe (11) gegenüberliegenden Ende die jeweilige Spannbacke (5, 6, 7 oder 8) gelagert und abgestützt ist,
- und **dass** zwischen der Wippe (11) und der jeweiligen Spannbacke (5, 6, 7 oder 8) ein Übertragungskeil (22) als Distanzüberbrückung angeordnet ist,
- und **dass** in dem Übertragungskeil (22) jeweils eine Durchgangsbohrung (24) eingearbeitet ist, die von dem jeweiligen Übertragungsstift (14, 15) durchgriffen ist bzw. durch diesen hindurchdringt.

2. Spannfutter nach Anspruch 1,
**dadurch gekennzeichnet,**
**dass** die Verkippungen der Wippe (11) einen Zustellausgleich für eines der beiden Paare der Spannbacken (5, 6, oder 7, 8) ergibt, die in eine gemeinsamen X- oder Y-Ebene bewegt sind.

3. Spannfutter nach Anspruch 1 oder 2,
**dadurch gekennzeichnet,**
**dass** in die Wippe (11) zwei Führungsnuten (16) eingearbeitet sind, in die jeweils einer der Übertragungsstifte (14 oder 15) geringfügig linear beweglich, vorzugsweise senkrecht zu der Längsachse (4) des Futterkörpers (3), eingesetzt ist.

4. Spannfutter nach Anspruch 3,
**dadurch gekennzeichnet**,
das an jedem Übertragungsstift (14, 15) ein Kopf (17) angearbeitet ist, der in eine der Führungsnuten (16) der Wippe (11) eingreift und dass die Außenkanten des Kopfes (17), die senkrecht zu der Zustellbewegung der Wippe (11) bzw. des Antriebskolbens (9) verlaufen, kleiner bemessen sind als die Länge der Führungsnut (16).

5. Spannfutter nach Anspruch 3 oder 4,
**dadurch gekennzeichnet,**
**dass** der Kopf (17) bezogen auf die Zustellrichtung der Wippe (11) an beiden gegenüberliegenden Innenwänden (18) der Führungsnut (16) anliegt und von diesen mit einer Zustellkraft beaufschlagbar ist.

6. Spannfutter nach einem der vorgenannten Ansprüche,
**dadurch gekennzeichnet,**
**dass** in dem Futterkörper (3) ein Fliehkraftgewicht (19) vorgesehen ist, das in diesem senkrecht zu der Zustellrichtung des Antriebskolbens (9) verschiebbar in dem Futterkörper (3) gelagert ist, dass das Fliehkraftgewicht (19) über einen Hebel (20) mit einem der Spannbacken (5, 6 7 oder 8) trieblich gekoppelt ist.

7. Spannfutter nach Anspruch 6,
**dadurch gekennzeichnet,**
**dass** der Hebel (20) während des Spannzustandes der Spannbacken (5, 6, 7, 8) in Richtung der Längsachse (4) des Futterkörpers (3) geneigt ist und dass das Fliehkraftgewicht (19) durch die Rotation des Spannfutters (1) radial nach außen gedrückt ist, derart, dass durch das Fliehkraftgewicht (19) über den Hebel (20) eine radial wirkende Spannkraft auf die jeweilige Spannbacken (5, 6, 7, 8) übertragen ist.

8. Spannfutter nach einem der vorgenannten Ansprüche,
**dadurch gekennzeichnet,**
**dass** der Abstand von zwei Übertragungsstiften (14, 15) zu den im Symmetrie-Mittelpunkt (12) der Wippe (11) angeordneten Bolzen (13) gleich groß bemessen ist.

9. Spannfutter nach einem der vorgenannten Ansprüche,
**dadurch gekennzeichnet,**
**dass** die zwei an der einen Wippe (11) befestigen Übertragungsstifte (14, 15) parallel verlaufen und in dem Antriebskolben (9) verschiebbar gelagert sind.

10. Spannfutter nach einem der vorgenannten Ansprüche,
**dadurch gekennzeichnet,**
**dass** die Außenkontur des einzuspannenden Werkstückes (2) eine beliebige Gestaltung aufweist und dass die Spannbacken (5, 6, 7, 8) an die vorhandenen Außenkonturen der Werkstücke (2) angepasst sind und diese teilweise umgreifen.

## Claims

1. A chuck (1) through which workpieces (2) are supported in a separate and centred manner for being processed by a machine tool,
- having a chuck body (3),
- having four clamping jaws (5, 6, 7, 8) mounted to the chuck body (3) in a radially movable manner, which are respectively arranged in pairs in an X or Y plane,
- and having a drive piston (9) supported in the chuck body (3) in an axially movable manner that is drivingly coupled to the four clamping jaws (5, 6, 7, 8) via a tapered surface or a helical toothing (10) provided on the drive piston (9) and the respective clamping jaws (5, 6, 7, 8) and that moves these towards the workpiece (2) to be clamped or away from it in a synchronous manner,
**characterised in that**
- a rocker (11) is provided between the drive piston (9) and two respective adjacent clamping jaws (5, 7 or 6, 8),
- that the rocker (11) has a centre of symmetry (12), into which a bolt (13) pivotably mounted to the driving piston (9) is inserted, around which the rocker (11) can be pivoted depending on the engagement of the clamping jaws (5, 6 or 7, 8) to the workpiece (2),
- and **in that** laterally adjacent to the bolt (13) a respective transfer pin (14, 15) is provided that is drivingly coupled to the rocker (11) at the end of which facing the rocker (11) the respective clamping jaw (5, 6, 7 or 8) is mounted or supported,
- and **in that** a transfer wedge (22) is provided between the rocker (11) and the respective clamping jaw (5, 6, 7 or 8) as a distance bridgeover,
- and **in that** a respective through-hole (24) is provided in the transfer wedge (22) through which a respective transfer pin (14, 15) passes or extends.

2. The chuck according to claim 1,
**characterised in that**
tilting the rocker (11) results in a feed compensation for one of both pairs of clamping jaws (5, 6, or 7, 8) that are moved in a common X or Y plane.

3. The chuck according to claim 1 or 2,
**characterised in that**
two guide grooves (16) are incorporated into the rocker (11), into which a respective one of the transfer pins (14 or 15) is inserted to be slightly linearly movable, preferably perpendicularly to the longitudinal axis (4) of the chuck body (3).

4. The chuck according to claim 3,
**characterised in that**
a head (17) is formed to each of the transfer pins (14, 15), which engages into one of the guide grooves (16) of the rocker (11) and **in that** the outer edges of the head (17), which extend perpendicularly to the feed movement of the rocker (11) or the drive piston (9), are smaller in size than the length of the guide groove (16).

5. The chuck according to claim 3 or 4,
**characterised in that**
in respect of the feed direction of the rocker (11) the head (17) is in contact with both of the inner walls (18) of the guide groove (16) facing each other and that through these a feed force can be applied thereupon.

6. The chuck according to one of the aforementioned claims, **characterised in that**
a centrifugal force weight (19) is provided in the chuck body (3), which is slidably supported in the chuck body (3) perpendicular to the feed direction of the drive piston (9), that the centrifugal force weight (19) is drivingly coupled to one of the clamping jaws (5, 6, 7 or 8) via a lever (20)

7. The chuck according to claim 6,
**characterised in that**
the lever (20) is inclined towards the longitudinal axis (4) of the chuck body (3) during the clamping state of the clamping jaws (5, 6, 7, 8) and **in that** the centrifugal force weight (19) is radially pressed outwards by the rotation of the chuck (1) in such a way that, through the centrifugal force weight (19), via the lever (20), a radially acting clamping force is transferred to the respective clamping jaw (5, 6, 7, 8).

8. The chuck according to one of the aforementioned claims, **characterised in that**
the distance between two transfer pins (14, 15) and the bolt (13) arranged in the centre of symmetry (12) of the rocker (11) is identical.

9. The chuck according to one of the aforementioned claims,
**characterised in that**
the two transfer pins (14, 15) attached to the rocker (11) extend in parallel and are slidably supported in the drive piston (9).

10. The chuck according to one of the aforementioned claims,
**characterised in that**
the outer contour of the workpiece (2) to be clamped has any desired design and **in that** the clamping jaws (5, 6, 7, 8) are adapted to the outer contours of the workpieces (2) and partially encompass them.

## Revendications

1. Mandrin de serrage (1) servant à l'appui de pièces à usiner individuelles et centrées (2) qui doivent être usinées à l'aide d'une machine-outil, avec
- un corps de mandrin (3),
- quatre mors de serrage (5, 6, 7, 8) logés de manière radialement mobiles sur le corps de mandrin (3) et disposés respectivement par paires dans un plan X ou Y,
- et avec un piston d'entraînement (9) se déplaçant axialement dans le corps de mandrin (3), et qui, par l'intermédiaire d'une surface oblique ou d'une denture hélicoïdale (10) prévues sur le piston d'entraînement (9) et sur les mors de serrage respectifs (5, 6, 7, 8), est en liaison d'entraînement avec les quatre mors de serrage (5, 6, 7, 8), avançant ceux-ci de manière synchrone en direction de la pièce à usiner serrée (2) ou les retirant de celle-ci,
**caractérisé en ce que**
- entre le piston d'entraînement (9) et respectivement deux mors de serrage voisins (5, 6 ou 7, 8), il est prévu une bascule (11),
- la bascule (11) possède un centre de symétrie (12) dans lequel il est inséré un boulon (13) logé de manière pivotant sur le piston d'entraînement (9) et autour duquel se laisse pivoter la bascule (11) en fonction de la portée des mors de serrage (5, 6 ou 7, 8)sur la pièce à usiner (2),
- sur le côté et près du boulon (13), il est prévu respectivement un goujon de transmission (14, 15) raccordé en liaison d'entraînement avec la bascule (11) et dont l'extrémité opposée à la bascule (11) porte ou appuie le mors de serrage respectif (5, 6, 7 ou 8),
- entre la bascule (11) et le mors de serrage respectif (5, 6, 7 ou 8), il est prévu un coin de transmission (22) pour le pontage de la distance,
- et que dans le coin de transmission (22), il est prévu respectivement un alésage de passage (24) traversé par le goujon de transmission respectif (14, 15).

2. Mandrin de serrage d'après la revendication 1,
**caractérisé en ce que**
l'actionnement de la bascule (11) produit une compensation d'avance pour une des deux paires de mors de serrage (5, 6 ou 7, 8) déplacées dans un plan commun X ou Y.

3. Mandrin de serrage d'après la revendication 1 ou 2,
**caractérisé en ce que**
dans la bascule (11), il est pratiqué deux rainures de guidage (16) dans lesquelles il est inséré un des goujons de transmission (14 ou 15) légèrement mobile en direction linéaire et de préférence perpendiculairement à l'axe longitudinal (4) du corps de mandrin (3).

4. Mandrin de serrage d'après la revendication 3,
**caractérisé en ce que**
sur chacun des goujons de transmission (14, 15), il est pratiqué une tête (17) qui s'engrène dans une des rainures de guidage (16) de la bascule (11) et que les bords extérieurs de la tête (17) s'étendant perpendiculairement au mouvement d'avance de la bascule (11) ou du piston d'entraînement (9), sont plus petits que la longueur de la rainure de guidage (16).

5. Mandrin de serrage d'après la revendication 3 ou 4,
**caractérisé en ce que**,
référée à la direction d'avance de la bascule (11), la tête (17) porte sur les deux parois opposées intérieures (18) de la rainure de guidage (16) et peut être soumise par celles-ci à une force d'avance.

6. Mandrin de serrage d'après une des revendications précédentes, **caractérisé en ce que**
dans le corps de mandrin (3), il est prévu un poids centrifuge (19) qui est logé de manière mobile, et perpendiculairement à la direction d'avance du piston d'entraînement (9), dans le corps de mandrin (3), et que moyennant un levier (20), le poids centrifuge (19) est raccordé en liaison d'entraînement à un des mors de serrage (5, 6, 7 ou 8).

7. Mandrin de serrage d'après la revendication 6,
**caractérisé en ce que**,
les mors de serrage (5, 6, 7, 8) étant serrés, le levier (20) est incliné en direction de l'axe longitudinal (4) du corps de mandrin (3) et que la rotation du mandrin de serrage (1) déplace le poids centrifuge (19) radialement vers l'extérieur, de sorte que par l'intermédiaire du levier (20), le poids centrifuge (19) produit une force de serrage radiale agissant sur le mors de serrage respectif (5, 6, 7, 8).

8. Mandrin de serrage d'après une des revendications précédentes, **caractérisé en ce que**
la distance entre deux goujons de transmission (14, 15) et le boulon (13) disposé dans le centre de symétrie (12) de la bascule (11) est identique.

9. Mandrin de serrage d'après une des revendications précédentes, **caractérisé en ce que**
les deux goujons de transmission (14, 15) montés sur une des bascules (11) sont parallèles et logés de manière mobile dans le piston d'entraînement (9).

10. Mandrin de serrage d'après une des revendications précédentes, **caractérisé en ce que**
le contour extérieur de la pièce à usiner serrée (2) peut être quelconque et que les mors de serrage (5, 6, 7, 8) sont adaptés aux contours extérieurs des pièces à usiner (2), puis les entourent partiellement.
